# FASCICULE DE BREVET EUROPEEN

(11) **EP 1 390 639 B1**
(45) Date de publication et mention de la délivrance du brevet: **27.07.2005**
(21) Numéro de dépôt: 02738280.3
(22) Date de dépôt: 24.05.2002
(51) Int. Cl.: F16F 7/00, F16F 13/10

(54) **SUPPORT ANTIVIBRATOIRE ET PROCEDE DE FABRICATION D'UN TEL SUPPORT**
ANTISCHWINGUNGSLAGER UND METHODE ZUR HERSTELLUNG SOLCHER
ANTI-VIBRATION MOUNT AND PRODUCTION METHOD FOR SAME

(30) Priorité: 25.05.2001 FR 0106884
(43) Date de publication de la demande: 25.02.2004
(73) Titulaire: HUTCHINSON, 75008 Paris (FR)
(72) Inventeur: VISAGE, Hervé, F-28200 Chateaudun (FR); LE GUILLANT, Daniel, F-28200 Chateaudun (FR); CAMUS, Arnaud, F-28290 Saint Pellerin (FR); COSTALUNGA, Hervé, F-28140 Nottonville (FR)
(74) Mandataire: Bérogin, Francis
(86) Numéro de dépôt international: PCT/FR2002/001760
(87) Numéro de publication internationale: WO 2002/095259

(56) Documents cités:
- US-A- 5 636 826
- PATENT ABSTRACTS OF JAPAN vol. 1999, no. 08, 30 juin 1999 (1999-06-30) & JP 11 063057 A (KENWOOD CORP), 5 mars 1999 (1999-03-05)

## Description

La présente invention est relative aux supports antivibratoires et aux procédés de fabrication de tels supports.

Plus particulièrement, l'invention concerne un support antivibratoire destiné à être interposé entre des premier et deuxième éléments rigides pour amortir des vibrations entre ces deux éléments au moins selon une direction principale de vibration, ce support comportant :
- une première et une deuxième armatures rigides destinées à être reliées respectivement aux premier et deuxième éléments rigides à réunir, la première armature comportant deux guides latéraux s'étendant longitudinalement sensiblement selon une première direction, dans un plan perpendiculaire à la direction principale de vibration, ces guides latéraux comportant eux-mêmes chacun au moins une surface d'appui s'étendant également parallèlement à la direction longitudinale du guide latéral auquel elle appartient,
- un insert rigide fixé à la première armature par engagement de cet insert entre les deux guides latéraux, sensiblement selon la première direction, perpendiculaire à la direction principale de vibration, au moins un élément choisi parmi l'insert et la première armature présentant au moins une zone de butée déformée plastiquement qui empêche l'insert de se dégager des guides latéraux, et
- un corps en élastomère surmoulant au moins partiellement l'insert et reliant cet insert à la deuxième armature.

Le document US-A-5 636 826 décrit un exemple de support antivibratoire de ce type. Ce type de support antivibratoire a l'inconvénient de présenter des jeux entre l'insert et la première armature, en particulier dans la direction principale de vibration et/ou dans la direction perpendiculaire à la fois à la direction principale des vibrations et à la première direction. Ces jeux proviennent du fait que, pour engager par coulissement l'insert entre les guides latéraux, les cotes de l'insert doivent être légèrement inférieures aux distances séparant les points des guides latéraux entre lesquels l'insert doit être engagé. Si tel n'est pas le cas, l'engagement de l'insert entre les guides latéraux doit être effectué en force, ce qui complique le procédé de montage de l'insert sur la première armature et nécessite un dimensionnement suffisant des pièces à assembler pour résister aux efforts liés aux contraintes dues à cette introduction en force de l'insert dans les guides latéraux.

La présente invention a notamment pour but de pallier ces inconvénients.

A cet effet, selon l'invention, un support antivibratoire du genre en question est caractérisé par le fait qu'au moins deux surfaces d'appui forment un coin par rapprochement de ces deux surfaces d'appui selon au moins une direction choisie parmi la direction principale de vibration et la deuxième direction.

Grâce à ces dispositions, l'assemblage de l'insert sur la première armature peut s'effectuer par coincement, sans que le procédé de montage de l'un sur l'autre ne nécessite des outils adaptés pour fournir des efforts importants, sans jeu lorsque l'insert est en butée contre les surfaces d'appui des guides latéraux, et sans qu'il soit nécessaire de dimensionner l'insert et/ou la première armature de manière à résister à des efforts relativement importants. Il résulte en particulier de ce dernier avantage un gain de poids.

Par ailleurs, l'assemblage de l'insert sur la première armature ne nécessite pas de goujon fileté ni d'écrou, ce qui réduit le poids et le coût du support antivibratoire, et simplifie son assemblage. En particulier, l'opération d'engagement coulissant de l'insert dans les guides latéraux de la première armature puis l'opération de déformation plastique pour créer la zone de butée qui maintient ensuite l'insert en position dans ces guides latéraux, peuvent être réalisées de façon totalement automatique.

Enfin, l'engagement de l'insert dans deux guides latéraux permet de diminuer également la concentration de contrainte mécanique dans l'insert au cours du fonctionnement même, et donc de diminuer encore le poids et l'encombrement de l'insert.

Dans des modes de réalisation préférés de l'invention, on peut éventuellement avoir recours en outre à l'une et/ou à l'autre des dispositions suivantes :
- l'insert est engagé dans deux guides latéraux parallèles qui s'étendent selon la première direction longitudinale, perpendiculaire à la direction principale de vibration, l'insert et lesdits guides latéraux étant conformés de façon que l'insert soit coincé dans lesdits guides latéraux, sans jeu dans la direction principale de vibration, les guides latéraux comportant chacun une première et une deuxième extrémités, la première extrémité étant ouverte dans la première direction, chaque guide présentant une hauteur libre, mesurée parallèlement à la direction principale de vibration, qui décroît de la première à la deuxième extrémité, et l'insert présentant des premières et secondes parties au niveau desdites première et deuxième extrémités ;
- la première partie de l'insert est un talon relevé perpendiculaire à la direction longitudinale des guides latéraux, la deuxième partie de l'insert étant un bord opposé audit talon ;
- l'insert bute contre les deuxièmes extrémités des guides latéraux ;
- les guides latéraux comportent chacun une première et une deuxième extrémités, les premières extrémités des deux guides latéraux étant séparées d'une distance supérieure à la distance séparant des deuxièmes extrémités des deux guides latéraux ;
- l'insert et les guides latéraux sont conformés de façon que l'insert soit coincé dans les guides latéraux, sans jeu dans une deuxième direction perpendiculaire à la première direction et à la direction principale de vibration ;
- l'insert comporte deux bords, qui s'étendent, lorsqu'il est en place sur la première armature, chacun respectivement parallèlement à une surface d'appui ;
- la zone de butée comprend un poinçonnage réalisé dans la première armature et formant une excroissance de matière au niveau de la première extrémité d'au moins un des guides latéraux ;
- chaque guide latéral comprend un rebord qui recouvre partiellement l'insert, et la zone de butée comprend au moins une zone rabattue réalisée sur le rebord du guide latéral et repliée contre l'insert ;
- la zone de butée comprend au moins une partie rabattue de l'insert, cette partie étant repliée contre un bord appartenant à la première armature ;
- le support comporte au moins une couche d'élastomère interposée entre l'insert et la première armature ; et
- l'insert est une tôle emboutie présentant une partie centrale sensiblement tronconique sur laquelle est surmoulé le corps en élastomère.

Selon un autre aspect, l'invention concerne un procédé de fabrication d'un support antivibratoire comprenant une ou plusieurs des caractéristiques énoncées ci-dessus et comprenant les étapes suivantes :
- on moule le corps en élastomère entre l'insert et la deuxième armature ;
- après démoulage, on engage l'insert dans les guides latéraux jusqu'à coincer ledit insert dans les guides latéraux,
- et on réalise ladite butée pour immobiliser l'insert par rapport à ladite première armature en empêchant ledit insert de ressortir des guides latéraux.

D'autres caractéristiques et avantages de l'invention apparaîtront au cours de la description suivante de plusieurs de ses formes de réalisation, données à titre d'exemples non limitatifs, en regard des dessins joints.

Sur les dessins :
- la figure 1 est une vue en perspective du support antivibratoire ;
- la figure 2 est une demi-vue en perspective du support de la figure 1, le plan de coupe étant sensiblement parallèle à la direction principale de vibration ;
- la figure 3 est une vue en perspective illustrant le processus de montage des composants principaux du support antivibratoire de la figure 1, à savoir le montage par coulissement de l'insert au sein de la première armature ;
- la figure 4 est une vue en perspective du support antivibratoire de la figure 1, montrant la zone de butée entre l'insert et la première armature ;
- la figure 5 est une vue en perspective et à plus grande échelle de la zone de butée de la figure 4 ;
- les figures 6 et 7 sont des vues en perspectives de divers modes de réalisation des guides latéraux ;
- les figures 8, 9, 10 et 11 sont des vues similaires à la figure 2, illustrant divers modes de réalisation de la zone de butée entre l'insert et la première armature ; et
- la figure 12 est une vue schématique en perspective du mode de réalisation des guides latéraux correspondant au support illustré par la figure 11.

Sur les différentes figures, les mêmes références désignent des éléments identiques ou similaires.

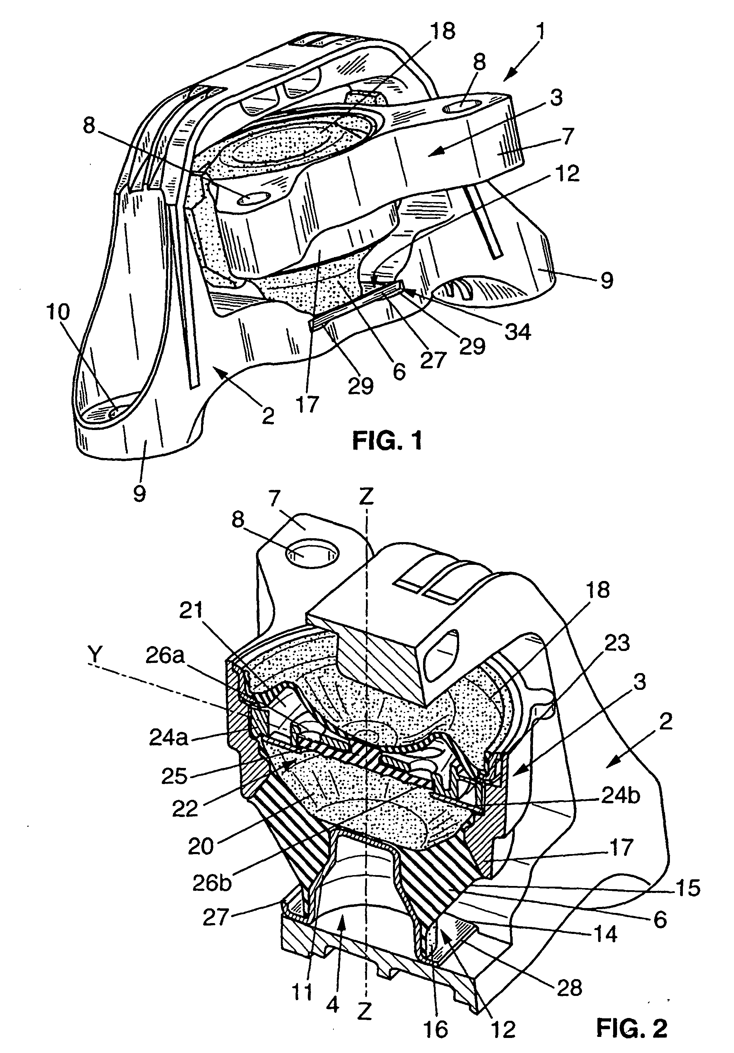

En référence aux figures 1 et 2, le support antivibratoire 1 objet de l'invention comprend :
- une première armature métallique 2, réalisée par exemple en fonte d'aluminium, de forme globalement annulaire, cette première armature s'étendant sensiblement selon un plan vertical et étant centrée sur un axe horizontal Y dans l'exemple considéré,
- une deuxième armature métallique 3, qui dans l'exemple représenté a une forme annulaire centrée sur un axe Z pouvant être notamment vertical, cet axe Z constituant l'axe principal des vibrations auxquelles est soumis le support antivibratoire 1, laquelle armature 3 peut être réalisée notamment en fonte d'aluminium et présente sensiblement une section circulaire centrée sur l'axe vertical Z,
- un insert 4 métallique de forme générale sensiblement tronconique, centré sur l'axe Z et solidarisé à la première armature 2,
- un corps en élastomère 6 reliant l'un à l'autre l'insert 4 à la deuxième armature 3, lequel corps est surmoulé et adhérisé, par exemple par vulcanisation, sur l'insert 4 et la deuxième armature 3.

La deuxième armature 3 est par exemple destinée à être solidarisée, par des bossages 7 situés en périphérie de ladite armature, avec un moteur de véhicule (non représenté), au moyen de dispositifs de fixation tels que des vis traversant des orifices 8 pratiqués dans ces bossages 7.

La première armature 2 est alors destinée à être solidarisée avec le châssis (non représenté) d'un véhicule par l'intermédiaire d'éléments d'interconnexion, tels que par exemple des pattes 9 en saillie venues de fabrication avec la première armature 2, ces pattes 9 étant pourvues d'orifices 10 pour le passage de dispositifs de connexion (vis, goujons, ou analogues).

En variante, la première armature 2 pourrait éventuellement faire partie intégrante du châssis du véhicule, ou plus généralement de l'un des deux éléments du véhicule reliés l'un à l'autre par le support antivibratoire 1.

En référence à la figure 2, l'insert 4 peut avantageusement être réalisé à partir d'une tôle métallique emboutie. Celle-ci comporte d'une part, une partie tronconique creuse 11 centrée sur l'axe Z et sur laquelle, au niveau de la paroi externe, est adhérisé le corps en élastomère 6, et d'autre part, une plaque de base 12, venue de fabrication avec la partie tronconique 11, sensiblement perpendiculaire à l'axe principal des vibrations Z.

Le corps en élastomère, vu en section dans un plan vertical comprenant l'axe Z (figure 2), présente quant à lui une paroi latérale 15 sensiblement tronconique, de révolution autour de l'axe vertical Z. Cette paroi latérale 15 s'étend entre d'une part, un sommet 16 solidaire de l'insert 4, et d'autre part, une base annulaire 17 solidaire de la deuxième armature 3.

La paroi interne de la deuxième armature 3 est reliée, notamment par sertissage, à la périphérie d'un soufflet 18 en élastomère mince et flexible qui délimite un boîtier étanche avec le corps en élastomère 6 et la deuxième armature 3.

Ce boîtier est divisé par une cloison 22 en deux chambres hydrauliques 20, 21 remplies de liquide, à savoir, d'une part, une chambre de travail 20 conique délimitée par le corps en élastomère 6 et d'autre part, une chambre de compensation 21 délimitée par le soufflet 18, ces deux chambres 20, 21 communiquant l'une avec l'autre par l'intermédiaire d'un passage étranglé 23 ménagé dans la cloison 22, entre une coque moulée en alliage léger 24a et une plaque de fermeture 24b en tôle qui constituent la cloison 22.

Par ailleurs, la cloison 22 peut classiquement comporter un clapet de découplage 25 en élastomère, monté avec un faible jeu entre la coque 24a et la plaque de fermeture 24b, les deux faces du clapet communiquant respectivement avec la chambre de travail 20 par l'intermédiaire d'au moins une ouverture 26b, ménagée dans la plaque 24b et avec la chambre de compensation par l'intermédiaire d'une grille 26a réalisée dans la coque 24a.

Le clapet 25 est particulièrement efficace pour absorber les vibrations de relativement haute fréquence et de faible amplitude entre les première et deuxième armatures 2, 3, tandis que le passage étranglé 23 est efficace pour amortir les vibrations de basse fréquence (par exemple inférieure à 20 Hz) et de grande amplitude (par exemple supérieure à 1 mm).

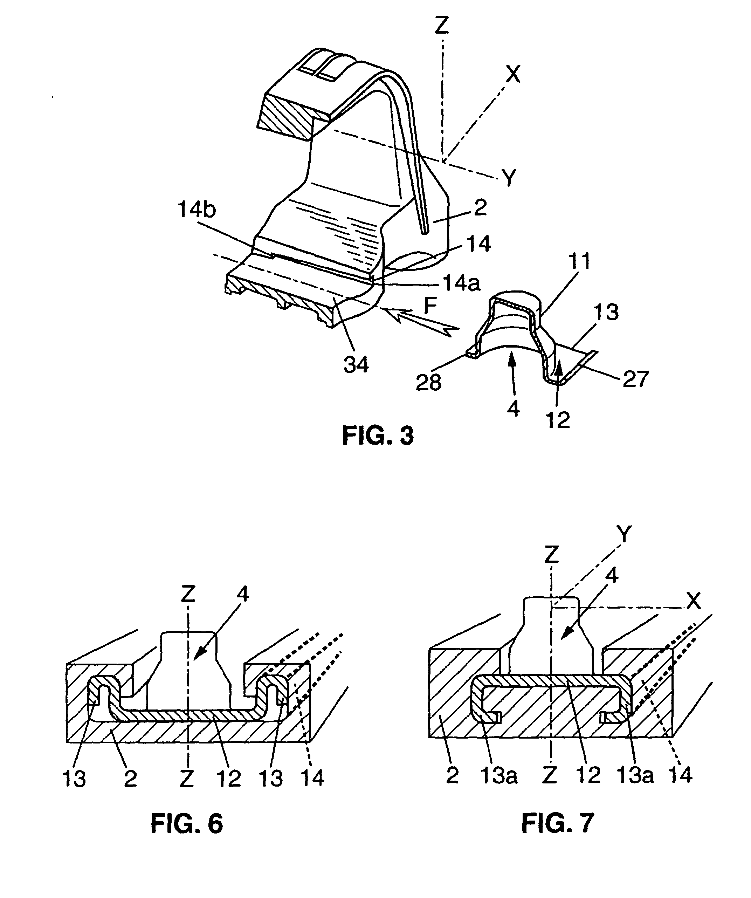

Comme représenté sur les figures 1 et 2, deux bords opposés de la plaque de base 12 de l'insert 4 sont engagés dans deux rainures 14, ces rainures s'étendant selon l'axe Y et étant ouvertes en regard l'une vers l'autre en direction de la plaque de base 12. Chacune des rainures réalisées dans la première armature s'étend entre une première et une deuxième extrémités 14a, 14b (voir figure 3), la première extrémité 14a étant ouverte parallèlement à la direction longitudinale Y et la deuxième extrémité 14b étant borgne dans l'exemple représenté.

Par ailleurs, chacune des rainures 14 comporte une hauteur libre, mesurée parallèlement à la direction principale des vibrations, qui décroît de la première à la deuxième extrémité.

Le mode opératoire décrivant la fixation entre les deux armatures 2, 3 est représenté en figure 3 et cette fixation est obtenue en faisant coopérer les parois latérales 13 de la plaque de base 12 avec les guides latéraux 14, ces guides 14 (dont un seul est représenté sur la figure 3) s'étendant perpendiculairement à la direction principale de vibration. La plaque de base 12 de l'insert 4, d'une manière similaire à un tiroir, s'engage par un mouvement de coulissement selon le sens de la flèche F entre les surfaces d'appui inférieure et supérieure des guides latéraux 14 du logement 34, jusqu'à ce que ladite plaque de base 12 se coince dans ces guides latéraux 14.

Ce coincement est obtenu par serrage vertical de la plaque de base 12 dans les guides 14 :
- d'une part, au niveau de la première extrémité 14a des guides, dans laquelle s'engage à force un talon 27 formé par un bord arrière relevé de la plaque de base 12,
- et d'autre part, au niveau de la deuxième extrémité 14b des guides, dans laquelle s'engage à force le bord avant 28 de la plaque de base 12, ce bord avant 28 étant parallèle au talon 27.

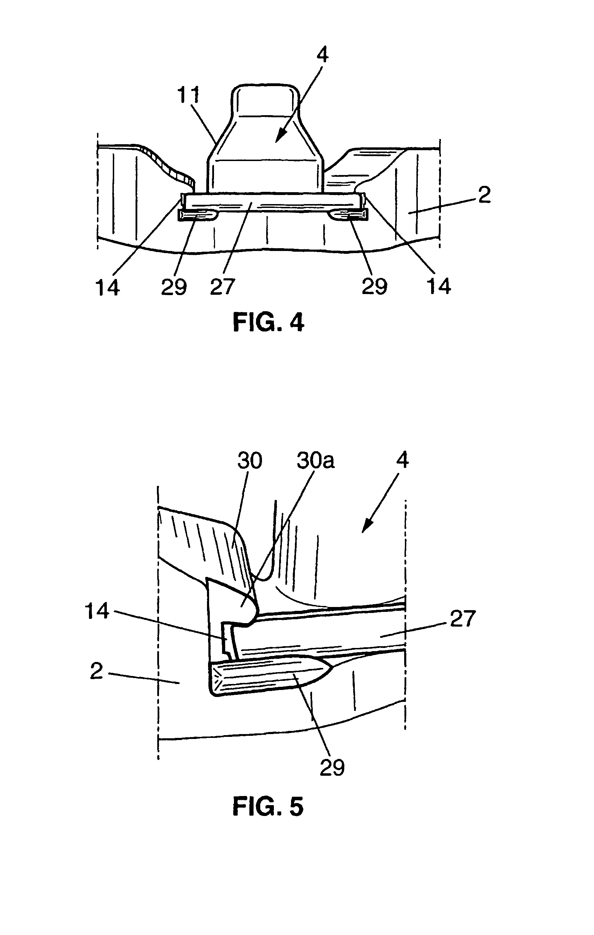

Cette immobilisation par coincement empêche que l'insert 4 ne vibre principalement selon l'axe Z, l'immobilisation en translation selon la direction de coulissement Y étant obtenue selon la variante de réalisation du support anti-vibratoire représenté en figures 1 et 2 :
- d'une part, par butée du bord avant 28 de la plaque de base 12 contre l'extrémité fermée 14b des guides 14,
- et d'autre part, par des zones de butée 29, bien visibles sur la figure 4, qui sont obtenues par déformation plastique de la première armature 2 notamment par poinçonnage au niveau des premières extrémités 14a des guides latéraux 14, ces zones de butée 29 coopérant avec le talon 27 pour l'empêcher de ressortir des extrémités 14a.

Par ailleurs, la plaque de base 12 est immobilisée dans la direction horizontale X perpendiculaire à l'axe Y, du fait de son engagement dans les guides 14, sans jeu dans ladite direction.

Comme représenté sur la figure 5, pour améliorer encore l'immobilisation de l'insert 4 dans son logement 27, on peut procéder en outre à une déformation plastique du rebord 30 de la première armature se situant au-dessus des guides latéraux 14, en rabattant ce rebord contre la plaque de base 12 au niveau d'au moins une zone rabattue 30a située par exemple à la première extrémité 14 de chaque guide 14 (la partie rabattue 30a déforme localement le talon 27 dans l'exemple représenté).

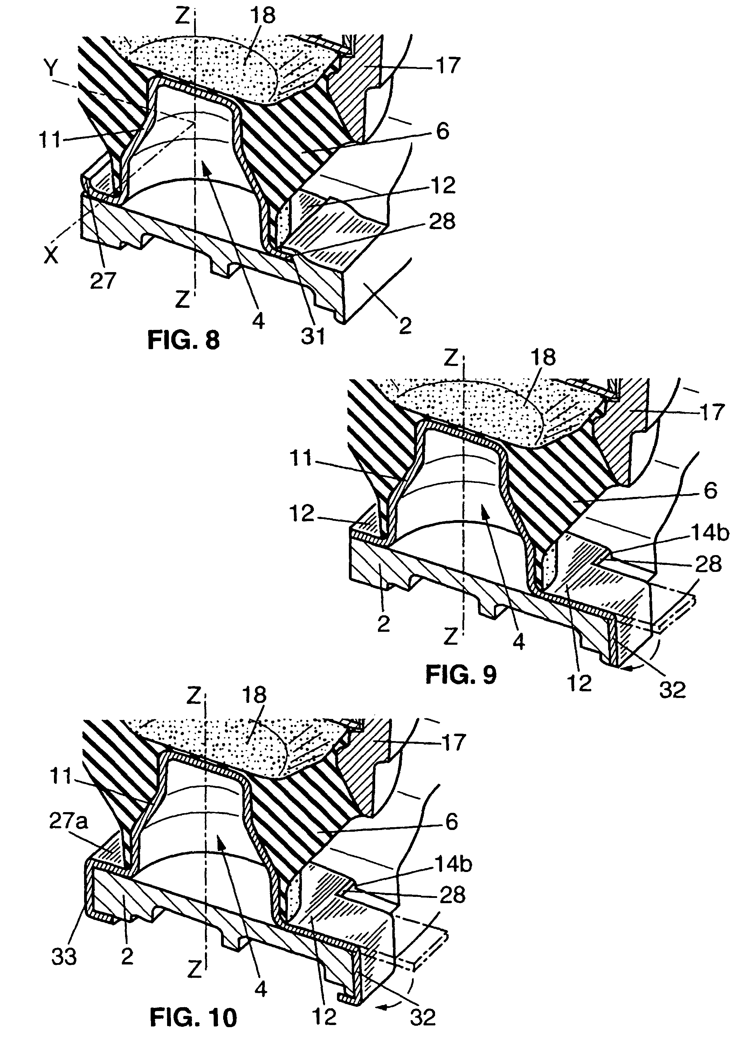

On a représenté en figures 6 et 7, différents profils que peuvent prendre, selon d'autres modes de réalisation du support conforme à la présente invention, respectivement les guides latéraux 14 réalisés dans la première armature 2 et les parois latérales 13 complémentaires de la plaque de base 12 de l'insert 4. En figure 6, les parois latérales 13 de la plaque de base 12 comportent une série de replis conformés en U ouverts vers le bas selon l'axe Z, et dans l'exemple représenté en figure 7, les parois latérales 13a de la plaque de base 12 formant des "U" ouverts l'un vers l'autre selon l'axe X. Dans ces deux modes de réalisation, les guides latéraux 14 présentent un profil convergent de leur première extrémité 14a à leur deuxième extrémité 14b, comme décrit précédemment.

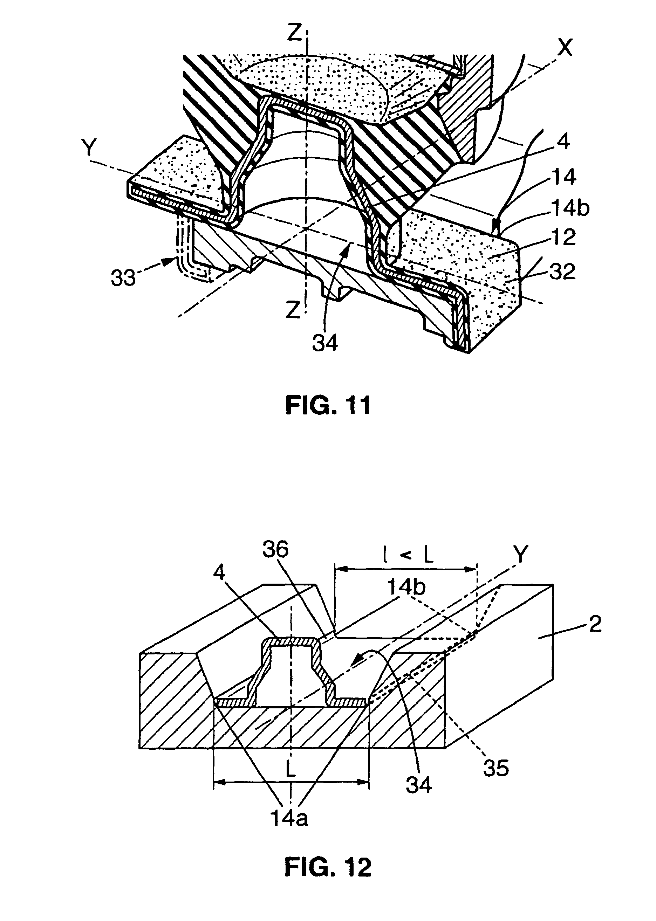

Les supports antivibratoires 1 représentés en figures 8, 9, 10 et 11 sont similaires à ceux précédemment décrits, mais en diffèrent simplement par divers modes de réalisation du dispositif de fixation entre la plaque de base 12 de l'insert 4 et le logement 27 de la première armature 2 :
- en figure 8, le bord avant 28 de la plaque de base 12 est engagé dans une rainure 31 qui s'étend selon l'axe X, la fixation de l'insert 4 sur la première armature 2 étant par ailleurs identique au mode de fixation déjà décrit ;
- en figure 9, l'immobilisation en translation de l'insert 4 dans le logement 27 de la première armature est obtenue par une patte rabattue 32 de la plaque de base 12, qui est repliée et éventuellement sertie contre la partie inférieure de la première armature 2, cette patte rabattue prolongeant le bord avant 28 de la plaque de base 12, lequel bord avant bute comme précédemment contre la deuxième extrémité 14b des guides 14 ;
- en figure 10, l'immobilisation de l'insert 4 est réalisée par repliement de deux pattes rabattues 32, 33 de l'insert 4, repliées respectivement contre deux bords opposés de la partie inférieure de la première armature 2, les pattes rabattues prolongeant les bords avant 28 et arrière 27a de la plaque de base 12 ;
- en figure 11, la plaque 12 de l'insert 4 traverse la totalité du logement 34 dans la direction Y, l'immobilisation en translation selon cette direction étant obtenue par le fait que les guides latéraux 14 sont conformés de façon que l'insert 4 soit coincé entre les surfaces d'appui latéral respectives des guides latéraux 14, sans jeu, dans la direction X ; ceci peut être réalisé par une disposition selon laquelle les guides latéraux 14 comportent chacun une première 14a et une deuxième 14b extrémités, les premières extrémités 14a des deux guides latéraux 14 étant séparées d'une distance L supérieure à la distance 1 séparant les deuxièmes extrémités 14b des deux guides latéraux 14 (voir figure 12), les bords 35 de la plaque de base 12, selon la direction Y, ou les parois latérales 13 ayant également un écartement variable équivalent à celui séparant les surfaces d'appui latéral respectives des guides latéraux 14 ; ainsi, l'insert 4 peut être engagé, selon la direction Y, sur la plaque de base 12 jusqu'à ce que les bords 35 ou les parois latérales 13 viennent en butée dans les guides latéraux 14, annulant ainsi tout jeu selon les directions X et Y.

Dans les modes de réalisation des figures 9 et 10, les bords latéraux de la plaque de base 12 sont, comme préalablement, coincés dans les guides 14 au moins au niveau des deuxièmes extrémités 14b de ces guides, du fait de la forme convergente desdits guides. Le talon 27 de la plaque de base peut alors être supprimé ou non, de même que les zones rabattues 30a susmentionnées des rebords 30. En revanche, les poinçons 29 pourraient alors être supprimés, puisque les pattes 32 constitueraient des zones de butée déformées plastiquement et empêcheraient l'insert 4 de ressortir des guides 14.

Dans le mode de réalisation de la figure 11, la plaque de base 12 est coincée, selon la direction Y d'une part par la forme convergente de ses bords 35 et surfaces d'appui 36 des guides latéraux 14 et, d'autre part, par les parties pliées 32.

Selon encore une autre variante de réalisation (représentée sur la figure 11), la plaque de base 12 peut être revêtue d'une couche de caoutchouc, au niveau de ses surfaces de contact avec la première armature 2, limitant et amortissant ainsi les jeux, notamment dans la direction Z.

On comprend de ce qui précède que le mode de fixation entre la plaque de base 12 de l'insert 4 (et donc toute la deuxième armature 3) et la première armature 2 sans le recours à des dispositifs de fixation du type goujon, vis, ou analogue permet de simplifier le processus de fabrication du support antivibratoire 1.

En particulier, lors du montage du corps en élastomère 6, on place dans un moule, l'insert 4 et la deuxième armature 3, mais non la première armature 2 ni aucun dispositif de fixation (vis, goujons..), ce qui permet éventuellement de réaliser plus d'empreintes dans un même moule compte tenu du relativement faible encombrement de la pièce ainsi moulée.

## Revendications

1. Support antivibratoire (1) destiné à être interposé entre des premier et deuxième éléments rigides pour amortir des vibrations entre ces deux éléments au moins selon une direction principale de vibration (Z), ce support comportant :
- une première (2) et une deuxième (3) armatures rigides destinées à être reliées respectivement aux premier et deuxième éléments rigides à réunir, la première armature (2) comportant deux guides latéraux (14) s'étendant longitudinalement sensiblement selon une première direction (Y), dans un plan perpendiculaire à la direction principale de vibration (Z), ces guides latéraux (14) comportant eux-mêmes chacun au moins une surface d'appui s'étendant également parallèlement à la direction longitudinale du guide latéral auquel elle appartient,
- un insert (4) rigide fixé à la première armature (2) par engagement de cet insert (4) entre les deux guides latéraux (14), sensiblement selon la première direction (Y), perpendiculaire à la direction principale de vibration (Z), au moins un élément choisi parmi l'insert (4) et la première armature (2) présentant au moins une zone de butée (29,30,32,33) déformée plastiquement qui empêche l'insert (4) de se dégager des guides latéraux (14), et
- un corps en élastomère (6) surmoulant au moins partiellement l'insert (4) et reliant cet insert (4) à la deuxième armature (2),
**caractérisé par le fait qu'**au moins deux surfaces d'appui forment un coin par rapprochement de ces deux surfaces d'appui selon au moins une direction (X;Z) perpendiculaire à la direction longitudinale des guides latéraux.

2. Support antivibratoire selon la revendication 1 dans lequel l'insert (4) est engagé dans deux guides latéraux (14) parallèles qui s'étendent selon la première direction (Y) longitudinale, perpendiculaire à la direction principale de vibration (Z), l'insert (4) et lesdits guides latéraux (14) étant conformés de façon que l'insert (4) soit coincé dans lesdits guides latéraux (14), sans jeu dans la direction principale de vibration, les guides latéraux (14) comportant chacun une première et une deuxième extrémités (14a,14b), la première extrémité (14a) étant ouverte dans la première direction (Y), chaque guide (14) présentant une hauteur libre, mesurée parallèlement à la direction principale de vibration (Z), qui décroît de la première (14a) à la deuxième extrémité (14b), et l'insert (4) présentant des premières et secondes parties au niveau desdites première et deuxième extrémités (14a,14b).

3. Support antivibratoire selon la revendication 2, dans lequel la première partie de l'insert (4) est un talon relevé (27) perpendiculaire à la direction longitudinale (Y) des guides latéraux, la deuxième partie de l'insert (4) étant un bord (28) opposé audit talon (27).

4. Support antivibratoire (1) selon l'une des revendications 2 et 3, dans lequel l'insert (4) bute contre les deuxièmes extrémités (14b) des guides latéraux (14).

5. Support antivibratoire selon la revendication 1, dans lequel les guides latéraux (14) comportent chacun une première (14a) et une deuxième (14b) extrémités, les premières extrémités (14a) des deux guides latéraux (14) étant séparées d'une distance (L) supérieure à la distance (1) séparant des deuxièmes extrémités (14b) des deux guides latéraux (14).

6. Support antivibratoire selon la revendication 5, dans lequel l'insert (4) et les guides latéraux (14) sont conformés de façon que l'insert (4) soit coincé dans les guides latéraux (14), sans jeu dans une deuxième direction (X) perpendiculaire à la première direction (Y) et à la direction principale de vibration (Z).

7. Support antivibratoire selon la revendication 6 dans lequel l'insert (4) comporte deux bords, qui s'étendent, lorsqu'il est en place sur la première armature (2), chacun respectivement parallèlement à une surface d'appui (36).

8. Support antivibratoire (1) selon l'une quelconque des revendications 2 à 7, dans lequel la zone de butée comprend un poinçonnage (29) réalisé dans la première armature (2) et formant une excroissance de matière au niveau de la première extrémité (14a) d'au moins un des guides latéraux.

9. Support antivibratoire selon l'une quelconque des revendications précédentes, dans lequel chaque guide latéral (14) comprend un rebord (30) qui recouvre partiellement l'insert (4), et la zone de butée comprend au moins une zone rabattue (30a) réalisée sur le rebord du guide latéral (14) et repliée contre l'insert (4).

10. Support antivibratoire selon l'une quelconque des revendications précédentes, dans lequel la zone de butée comprend au moins une partie rabattue (32, 33) de l'insert (4), cette partie étant repliée contre un bord appartenant à la première armature (2).

11. Support antivibratoire selon l'une quelconque des revendications précédentes, comportant au moins une couche d'élastomère interposée entre l'insert (4) et la première armature (2).

12. Support antivibratoire selon l'une quelconque des revendications précédentes, dans lequel l'insert (4) est une tôle emboutie présentant une partie centrale sensiblement tronconique sur laquelle est surmoulé le corps en élastomère (6).

13. Procédé de fabrication d'un support antivibratoire selon l'une quelconque des revendications précédentes, comprenant les étapes suivantes :
- on moule le corps en élastomère (6) entre l'insert (4) et la deuxième armature (3) ;
- après démoulage, on engage l'insert (4) dans les guides latéraux (14) jusqu'à coincer ledit insert (4) dans les guides latéraux,
- et on réalise ladite butée (29,30a,32,33) pour immobiliser l'insert (4) par rapport à ladite première armature (2) en empêchant ledit insert (4) de ressortir des guides latéraux (14).

## Claims

1. An antivibration support (1) for interposing between first and second rigid elements in order to damp vibration between said two elements, at least in a main vibration direction (Z), the support comprising:
· first and second rigid strength members (2, 3) for connecting respectively to the first and second rigid elements that are to be connected together, the first strength member (2) having two lateral guides (14) extending longitudinally substantially in a first direction (Y) in a plane perpendicular to the main vibration direction (Z), each of these lateral guides (14) itself including at least one bearing surface also extending parallel to the longitudinal direction of the lateral guide to which it belongs;
· a rigid insert (4) fixed to the first strength member (2) by said insert (4) being engaged between the two lateral guides (14) substantially along the first direction (Y) perpendicular to the main vibration direction (Z), at least one element selected from the insert (4) and the first strength member (2) presenting at least one abutment zone (29, 30, 32, 33) that is plastically deformed to prevent the insert (14) from separating from the lateral guides (14); and
· an elastomer body (6) overmolded on at least part of the insert (4) and connecting said insert (4) to the second strength member (2);
the support being **characterized by** the fact that at least two bearing surfaces form a wedge by said two bearing surfaces approaching each other in at least one direction (X; Z) perpendicular to the longitudinal direction of the lateral guides.

2. An antivibration support according to claim 1, in which the insert (4) is engaged in two parallel lateral guides (14) extending in the first longitudinal direction (Y) perpendicular to the main vibration direction (Z), the insert (4) and said lateral guides (14) being shaped in such a manner that the insert (4) is wedged in said lateral guides (14) without play in the main vibration direction, each of the lateral guides (14) having a first end and a second end (14a, 14b), the first end (14a) being open in the first direction (Y), each guide (14) having free height measured parallel to the main vibration direction (Z) which decreases going from the first end (14a) to the second end (14b), and the insert (4) presenting first and second portions at said first and second ends (14a, 14b).

3. An antivibration support according to claim 2, in which the first portion of the insert (4) is a raised rim (27) perpendicular to the longitudinal direction (Y) of the lateral guides, the second portion (4) being an edge (28) opposite said rim (27).

4. An antivibration support (1) according to claim 2 or claim 3, in which the insert (4) comes into abutment against the second ends (14b) of the lateral guides (14).

5. An antivibration support according to claim 1, in which each of the lateral guides (14) has first and second ends (14a, 14b), the first ends (14a) of the two lateral guides (14) being spaced apart by a distance (L) greater than the distance (ℓ) between the second ends (14b) of the two lateral guides (14).

6. An antivibration support according to claim 5, in which the insert (4) and the lateral guides (14) are shaped in such a manner that the insert (4) is wedged in the lateral guides (14) without play in a second direction (X) perpendicular to the first direction (Y) and to the main vibration direction (Z).

7. An antivibration support according to claim 6, in which the insert (4) has two edges, each of which extends parallel to a respective bearing surface (36) when the insert is in place on the first strength member (2).

8. An antivibration support (1) according to any one of claims 2 to 7, in which the abutment zone comprises a punching (29) made in the first strength member (2) and forming a projection of material at the first end (14a) of at least one of the lateral guides.

9. An antivibration support according to any preceding claim, in which each lateral guide (14) has a lip (30) covering the insert (4) in part, and the abutment zone comprises at least one pressed-down zone (30a) of the lip of the lateral guide (14) pressed against the insert (4).

10. An antivibration support according to any preceding claim, in which the abutment zone comprises at least one folded-down portion (32, 33) of the insert (4), said portion being folded down against an edge belonging to the first strength member (2).

11. An antivibration support according to any preceding claim, having at least one layer of elastomer interposed between the insert (4) and the first strength member (2).

12. An antivibration support according to any preceding claim, in which the insert (4) is a stamped metal sheet having a central portion that is substantially frustoconical on which the elastomer body (6) is overmolded.

13. A method of manufacturing an antivibration support according to any preceding claim, the method comprising the following steps:
· molding the elastomer body (6) between the insert (4) and the second strength member (3);
· after unmolding, engaging the insert (4) in the lateral guides (14) until said insert (4) becomes wedged in the lateral guides; and
· making said abutment (29, 30a, 32, 33) to prevent the insert (4) from moving relative to said first strength member (2), thereby preventing said insert (4) from escaping from the lateral guides (14).

## Patentansprüche

1. Schwingungsdämpfendes Lager (1), das dazu vorgesehen ist, zwischen einem ersten und einem zweiten starren Element angeordnet zu werden, um Schwingungen zwischen diesen beiden Elementen zumindest in einer Hauptschwingrichtung (Z) zu dämpfen, wobei dieses Lager aufweist:
- eine erste und eine zweite starre Halterung (2, 3), die dazu bestimmt sind, mit dem ersten bzw. dem zweiten miteinander zu verbindenden starren Element verbunden zu werden, wobei die erste Halterung (2) zwei seitliche Führungen (14) aufweist, die sich im Wesentlichen in einer ersten Längsrichtung (Y) in einer Ebene erstrecken, die im rechten Winkel zu der Hauptschwingrichtung (Z) liegt, wobei diese seitlichen Führungen (14) ihrerseits jeweils mindestens eine Anlagefläche aufweisen, die sich ebenfalls parallel zur Längsrichtung der seitlichen Führung erstreckt, zu der sie gehört,
- einen starren Einsatz (4), der an der ersten Halterung (2) durch Eingreifen dieses Einsatzes (4) zwischen den beiden seitlichen Führungen (14) im Wesentlichen in der ersten Richtung (Y) im rechten Winkel zu der Hauptschwingrichtung (Z) an der ersten Halterung (2) befestigt ist, wobei mindestens ein Element, wahlweise der Einsatz (4) oder die erste Halterung (2), mindestens einen plastisch verformten Anschlagbereich (29, 30, 32, 33) aufweist, der verhindert, dass der Einsatz (4) sich aus den seitlichen Führungen (14) löst, und
- einen Elastomerkörper (6), der den Einsatz (4) zumindest teilweise überformt und diesen Einsatz (4) mit der zweiten Halterung (3) verbindet,
**dadurch gekennzeichnet,**
**dass** mindestens zwei Anlageflächen durch Annäherung dieser beiden Anlageflächen in mindestens einer Richtung (X; Z), die im rechten Winkel zu der Längsrichtung der seitlichen Führungen liegt, einen Winkel bilden.

2. Schwingungsdämpfendes Lager nach Anspruch 1, bei dem der Einsatz (4) in zwei parallelen seitlichen Führungen (14) in Eingriff ist, die sich in der ersten Längsrichtung (Y) erstrecken, die im rechten Winkel zu der Hauptschwingrichtung (Z) liegt, wobei der Einsatz (4) und diese seitlichen Führungen (14) dergestalt geformt sind, dass der Einsatz (4) in diesen seitlichen Führungen (14) ohne Spiel in der Hauptschwingrichtung eingeklemmt ist, wobei die seitlichen Führungen (14) jeweils ein erstes und ein zweites Ende (14a, 14b) aufweisen, wobei das erste Ende (14a) in der ersten Richtung (Y) offen ist, wobei jede Führung (14), gemessen parallel zur Hauptschwingrichtung (Z), eine frei Höhe hat, die vom ersten Ende (14a) zum zweiten Ende (14b) hin abnimmt, und wobei der Einsatz (4) im Bereich dieses ersten und zweiten Endes (14a, 14b) einen ersten und einen zweiten Teil aufweist.

3. Schwingungsdämpfendes Lager nach Anspruch 2, bei dem der erste Teil des Einsatzes (4) ein aufgebogener Ansatz (27) ist, der sich im rechten Winkel zur Längsrichtung (Y) der seitlichen Führungen erstreckt, und wobei der zweite Teil des Einsatzes (4) ein von diesem Ansatz (27) abgewandter Rand (28) ist.

4. Schwingungsdämpfendes Lager nach einem der Ansprüche 2 und 3, bei dem der Einsatz (4) an den zweiten Enden (14b) der seitlichen Führungen (14) anschlägt.

5. Schwingungsdämpfendes Lager nach Anspruch 1, bei dem die seitlichen Führungen (14) jeweils ein erstes und ein zweites Ende (14a, 14b) aufweisen, wobei die ersten Enden (14a) der beiden seitlichen Führungen (14) in einem Abstand (L) voneinander entfernt liegen, der größer ist als der Abstand (1) zwischen den zweiten Enden (14b) der beiden seitlichen Führungen (14).

6. Schwingungsdämpfendes Lager nach Anspruch 5, bei dem der Einsatz (4) und die seitlichen Führungen (14) dergestalt geformt sind, dass der Einsatz (4) in den seitlichen Führungen (14) ohne Spiel in einer zweiten Richtung (X) eingeklemmt ist, die im rechten Winkel zur ersten Richtung (Y) und zur Hauptschwingrichtung (Z) liegt.

7. Schwingungsdämpfendes Lager nach Anspruch 6, bei dem der Einsatz (4) zwei Ränder aufweist, die sich, wenn er an der ersten Halterung (2) angebracht ist, jeweils parallel zu einer Anlagefläche (36) erstrecken.

8. Schwingungsdämpfendes Lager nach einem der Ansprüche 2 bis 7, bei dem der Anschlagbereich eine Lochung (29) aufweist, die in der ersten Halterung (2) ausgeführt ist und im Bereich des ersten Endes (14a) von mindestens einer der seitlichen Führungen eine Materialausstülpung bildet.

9. Schwingungsdämpfendes Lager nach einem der vorherigen Ansprüche, bei dem jede seitliche Führung (14) einen Rand (30) besitzt, der den Einsatz (4) teilweise abdeckt, und der Anschlagbereich mindestens einen umgebogenen Bereich (30a) umfasst, der an dem Rand der seitlichen Führung (14) ausgeführt ist und zu dem Einsatz (4) hin umgebogen ist.

10. Schwingungsdämpfendes Lager nach einem der vorherigen Ansprüche, bei dem der Anschlagbereich mindestens einen umgebogenen Teil (32, 33) des Einsatzes (4) umfasst, wobei dieser Teil an einer Kante umgebogen ist, die zu der ersten Halterung (2) gehört.

11. Schwingungsdämpfendes Lager nach einem der vorherigen Ansprüche, das mindestens eine Elastomerschicht enthält, die zwischen dem Einsatz (4) und der ersten Halterung (2) angeordnet ist.

12. Schwingungsdämpfendes Lager nach einem der vorherigen Ansprüche, bei dem der Einsatz (4) ein gebördeltes Blech mit einem im Wesentlichen kegelstumpfförmigen zentralen Teil ist, auf den der Elastomerkörper (6) aufgeformt ist.

13. Verfahren zur Herstellung eines schwingungsdämpfenden Lagers nach einem der vorherigen Ansprüche, das die folgenden Verfahrensschritte umfasst:
- der Elastomerkörper (6) wird zwischen dem Einsatz (4) und der zweiten Halterung (3) geformt,
- nach dem Ausformen wird der Einsatz (4) zwischen die seitlichen Führungen (14) eingeführt, bis dieser Einsatz (4) zwischen den seitlichen Führungen (14) festsitzt,
- und es wird der genannte Anschlag (29, 30a, 32, 33) hergestellt, um den Einsatz (4) gegenüber der ersten Halterung (2) zu blockieren, indem er verhindert, dass dieser Einsatz (4) aus den seitlichen Führungen (14) wieder austritt.
